# EUROPEAN PATENT SPECIFICATION

(11) **EP 4 559 639 B1**
(45) Date of publication and mention of the grant of the patent: **18.03.2026**
(21) Application number: 24210304.2
(22) Date of filing: 31.10.2024
(51) Int. Cl.: B25J 9/10, B25J 19/00, B25J 17/00

(54) **ROBOT AND METHOD FOR MANUFACTURING ROBOT**
ROBOTER UND VERFAHREN ZUR HERSTELLUNG EINES ROBOTERS
ROBOT ET PROCÉDÉ DE FABRICATION DE ROBOT

(30) Priority: 22.11.2023 JP 2023198688
(43) Date of publication of application: 28.05.2025
(73) Proprietor: Kabushiki Kaisha Yaskawa Denki, Kitakyushu-shi, Fukuoka 806-0004 (JP)
(72) Inventor: SOTOBAYASHI, Kyoko, Kitakyushu-shi, 8060004 (JP); NINOMIYA, Takeyuki, Kitakyushu-shi, 8060004 (JP); MOCHIZUKI, Kenki, Kitakyushu-shi, 8060004 (JP)
(74) Representative: Novagraaf International SA

(56) References cited:
- CN-U- 209 682 229
- US-A1- 2006 179 964
- US-A1- 2021 178 574

## Description

### TECHNICAL FIELD

Embodiments of the disclosure relate to a robot and a method for manufacturing the robot.

### BACKGROUND ART

For example, Patent Literature 1 describes a rotary electric machine attached to an arm of a robot. The rotary electric machine includes a rotary electric machine body configured to rotate a rotating body around an axis, a braking device configured to stop the rotation of the rotating body, and a housing configured to hold the rotary electric machine body and the braking device. The braking device is disposed at a position offset from the axis of the rotating body. Document US2021178574A1 relates to robot joint structures. Document US2006179964A1 relates to an articulated manipulator including a plurality of arm members and joints each connecting the adjacent arm members for turning thereon. Document CN209682229U relates to a driving device, in particular to a light robot driving joint.

### CITATION LIST

### PATENT LITERATURE

Patent Document 1: JP 2016-131472 A

### SUMMARY OF INVENTION

### TECHNICAL PROBLEM

In the related art described above, the braking device is provided so as to protrude in an axial direction from the rotary electric machine body at the position offset from the axis of the rotating body. For this reason, there is room for further improvement in relation to downsizing of the arm.

In light of the foregoing problems, an object of the present invention is to provide a robot and a method for manufacturing the robot with which downsizing of an arm is possible.

### SOLUTION TO PROBLEM

In order to resolve the above-described problems, according to an aspect of the present invention, a robot is applied that includes a first arm, a second arm rotatably coupled to the first arm, a first motor housed in the first arm and including a first gear configured to rotate around a first axial center, a first decelerator configured to decelerate rotation of a second gear and transmit the decelerated rotation to a first output shaft, the first decelerator including the second gear configured to rotate, in conjunction with rotation of the first gear, around a second axial center parallel to the first axial center and offset from the first axial center, and the first output shaft coupled to the second arm, and a first brake device configured to brake the rotation of the first gear, the first brake device being housed in the first arm to face the first motor in a direction perpendicular to the first axial center, and including a third gear configured to rotate around a third axial center parallel to the first axial center and the second axial center and offset from each of the first axial center and the second axial center, and rotate in conjunction with the first gear at a position separated from the second gear, wherein the first gear is coupled to the second gear and wherein the third gear is provided with a gap between the third gear and the second gear.

According to another aspect of the present invention, a method for manufacturing a robot is applied to a robot including a first arm, and a second arm rotatably coupled to the first arm, the method including assembling, with respect to a first motor and a first decelerator, a first brake device such that the first brake device faces the first motor in a direction perpendicular to a first axial center, a third axial center is parallel to the first axial center and a second axial center, and is separated from each of the first axial center and the second axial center, and a third gear rotates in conjunction with a first gear at a position separated from a second gear, wherein the first brake device includes the third gear configured to rotate around the third axial center and brake rotation of the first gear, the first motor is housed in the first arm and includes the first gear configured to rotate around the first axial center, and the first decelerator is configured to decelerate rotation of the second gear and transmit the decelerated rotation to a first output shaft, the first decelerator including a second gear configured to rotate, in conjunction with the rotation of the first gear, around the second axial center parallel to the first axial center and offset from the first axial center, and the first output shaft coupled to the second arm, wherein the first gear is coupled to the second gear and wherein the method further comprises the step of providing a gap between the third gear and the second gear.

### ADVANTAGEOUS EFFECTS OF INVENTION

According to the robot and the like of the present invention, it is possible to downsize an arm.

### BRIEF DESCRIPTION OF DRAWINGS

FIG. 1 is a perspective view illustrating an example of a configuration of a robot according to an embodiment.
FIG. 2 is a perspective view illustrating an example of a state in which a cover of a wrist portion of the robot is attached.
FIG. 3 is a perspective view illustrating an example of a state in which the cover of the wrist portion of the robot is removed.
FIG. 4 is a cross-sectional view illustrating an example of a configuration of an actuator provided in a joint portion.
FIG. 5 is a view as viewed from the direction of an arrow A illustrated in FIG. 4, illustrating an example of an arrangement configuration of each of gears of the actuator.
FIG. 6 is a cross-sectional view illustrating an example of a configuration of an actuator provided in another joint portion.
FIG. 7 is a view as viewed from the direction of an arrow B illustrated in FIG. 6, illustrating an example of an arrangement configuration of each of gears of the actuator.
FIG. 8 is an overall view schematically illustrating an example of an arrangement of motors and brake devices as viewed from the direction of an arrow C illustrated in FIG. 3.
FIG. 9 is an overall view schematically illustrating the example of the arrangement of the motors and the brake devices as viewed from the direction of an arrow D illustrated in FIG. 3.
FIG. 10 is an overall view schematically illustrating an example of the arrangement of the motors and the brake devices as viewed from the direction of an arrow E illustrated in FIG. 3.

### DESCRIPTION OF EMBODIMENTS

Embodiments will be described below with reference to the drawings.

### 1. Configuration of Robot

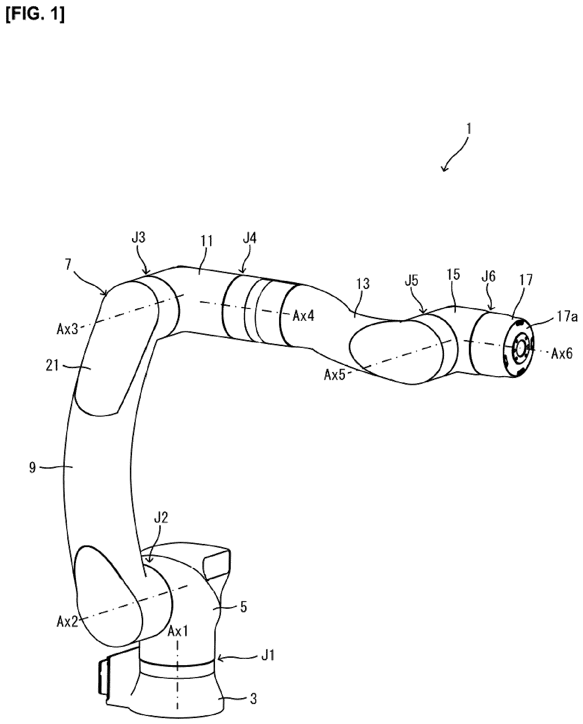

An example of a configuration of a robot according to an embodiment will be described with reference to FIG. 1. FIG. 1 is a perspective view illustrating an example of the configuration of the robot according to the embodiment.

As illustrated in FIG. 1, a robot 1 is configured, for example, as a vertical articulated six axis robot including six joint portions J1 to J6. An end effector (not illustrated) corresponding to work performed by the robot 1 is attached to a distal end portion 17a of the robot 1. The end effector is, for example, a robot hand or the like. The robot 1 may be a robot with axes other than the six axes (for example, five axes, seven axes, or the like). Further, the robot 1 may be a robot other than the vertical articulated robot, such as a horizontal articulated robot, a parallel link robot, or the like.

The robot 1 includes a base 3, a turning portion 5, and an arm 7. The base 3 is fixed to the floor or a stand, for example.

The turning portion 5 is supported by an upper end portion of the base 3 so as to be pivotable around a rotation axis Ax1 parallel to the vertical direction. The turning portion 5 is driven to pivot around the rotation axis Ax1 with respect to the upper end portion of the base 3 by driving of an actuator Ac1 (not illustrated) provided in the joint portion J1 that rotatably couples the base 3 and the turning portion 5 that are adjacent to each other.

The arm 7 is supported, for example, by a side portion on one side of the turning portion 5. The arm 7 includes a lower arm portion 9, an elbow portion 11, an upper arm portion 13, a wrist portion 15, and a flange portion 17.

The lower arm portion 9 is supported by the side portion on the one side of the turning portion 5 so as to be pivotable around a rotation axis Ax2 perpendicular to the rotation axis Ax1. The lower arm portion 9 is driven to pivot around the rotation axis Ax2 with respect to the side portion on the one side of the turning portion 5 by driving of an actuator Ac2 (not illustrated) provided in the joint portion J2 that rotatably couples the turning portion 5 and the lower arm portion 9 that are adjacent to each other.

The elbow portion 11 is supported by a distal end portion of the lower arm portion 9 so as to be pivotable around a rotation axis Ax3 parallel to the rotation axis Ax2. The elbow portion 11 is driven to pivot around the rotation axis Ax3 with respect to the distal end portion of the lower arm portion 9 by driving of an actuator Ac3 (not illustrated) provided in the joint portion J3 that rotatably couples the lower arm portion 9 and the elbow portion 11 that are adjacent to each other.

The upper arm portion 13 is supported by a distal end portion of the elbow portion 11 so as to be rotatable about a rotation axis Ax4 perpendicular to the rotation axis Ax3. The upper arm portion 13 is driven to rotate around the rotation axis Ax4 with respect to the distal end portion of the elbow portion 11 by driving of an actuator Ac4 (not illustrated) provided in the joint portion J4 that rotatably couples the elbow portion 11 and the upper arm portion 13 that are adjacent to each other.

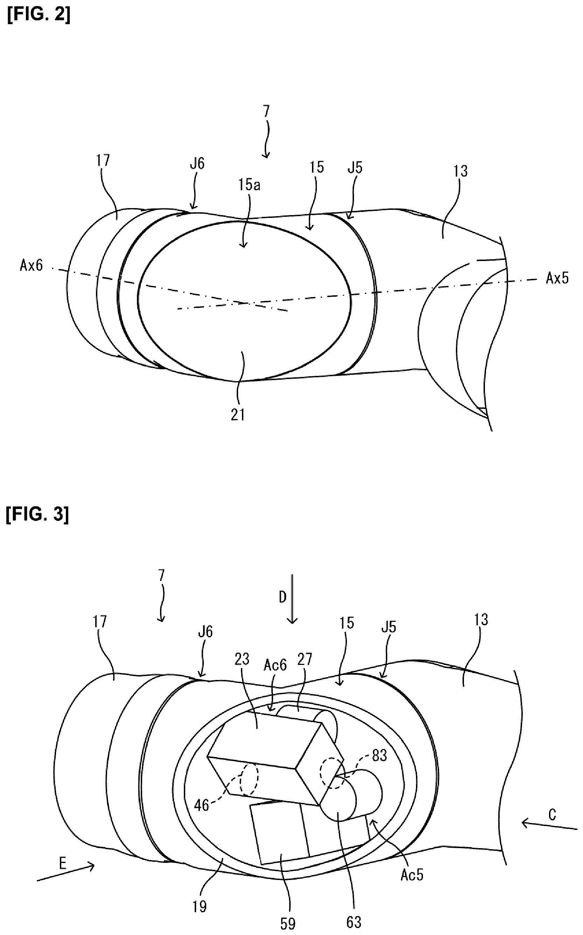

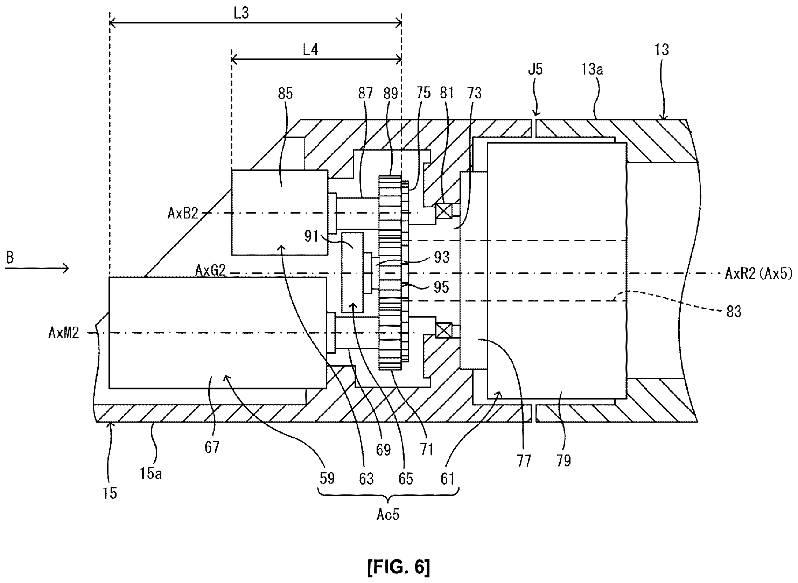

The wrist portion 15 is supported by a distal end portion of the upper arm portion 13 so as to be pivotable about a rotation axis Ax5 perpendicular to the rotation axis Ax4. The wrist portion 15 is driven to pivot around the rotation axis Ax5 with respect to the distal end portion of the upper arm portion 13 by driving of an actuator Ac5 (see FIGS. 3 and 6 to be described later) provided in the joint portion J5 that rotatably couples the upper arm portion 13 and the wrist portion 15 that are adjacent to each other.

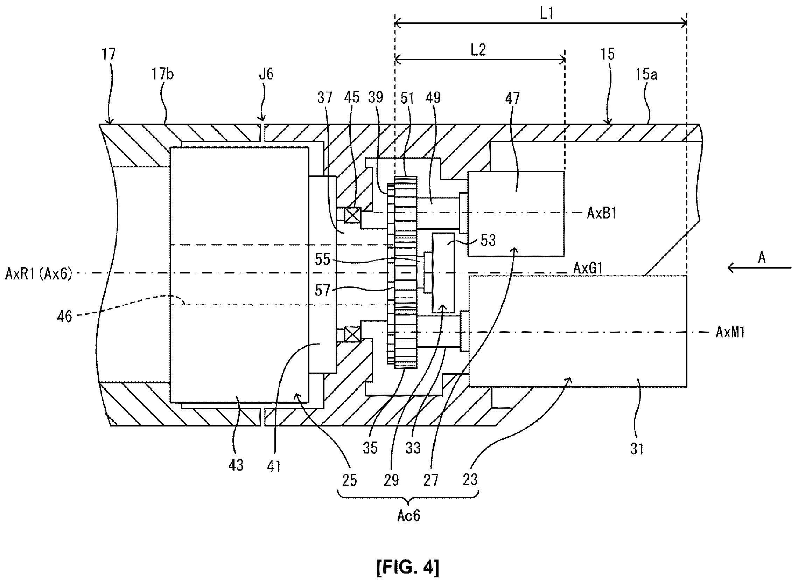

The flange portion 17 is supported by a distal end portion of the wrist portion 15 so as to be rotatable around a rotation axis Ax6 perpendicular to the rotation axis Ax5. The flange portion 17 is driven to rotate around the rotation axis Ax6 with respect to the distal end portion of the wrist portion 15 by driving of an actuator Ac6 (see FIGS. 3 and 4 to be described later) provided in the joint portion J6 that rotatably couples the wrist portion 15 and the flange portion 17 that are adjacent to each other.

The end effector is attached to the distal end portion 17a of the flange portion 17 and rotates around the rotation axis Ax6 together with the rotation of the flange portion 17 around the rotation axis Ax6.

The robot 1 having the above configuration is the six axis robot including the six joint portions J1 to J6 provided with the six actuators Ac1 to Ac6. Each of the actuators Ac1 to Ac6 that drive the joint portions J1 to J6 is configured by a motor, a brake device, a decelerator, and the like, for example.

Note that, in the above description, the rotation around the rotation axes in the longitudinal direction (or the extending direction) of the arm 7 is referred to as "rotation", and the rotation around the rotation axes perpendicular to the longitudinal direction (or the extending direction) of the arm 7 is referred to as "pivoting", in order to distinguish between the two.

Note that the above-described configuration of the robot 1 is an example, and is not limited to the content described above. For example, a torque sensor may be provided in at least one of the actuators Ac1 to Ac6, or a force sensor may be provided in the robot 1. In this case, when the robot 1 receives an external force due to collision with a person or an object, for example, it is possible to immediately stop the operation, avoid the external force in a direction opposite to the direction in which the external force acts, or the like, and the robot 1 can thus be configured as a human-collaborative robot capable of operating together with an operator.

### 2. Configuration of Actuator Ac6 of Joint Portion J6

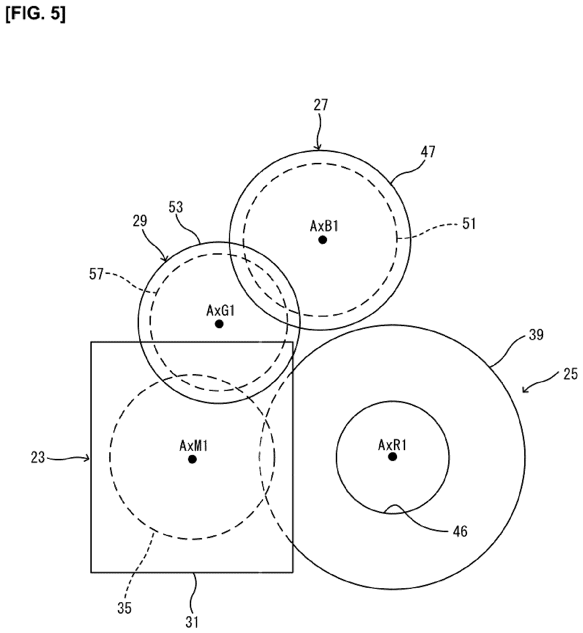

Next, an example of the configuration of the actuator Ac6 provided in the joint portion J6 will be described with reference to FIGS. 2 to 5. FIG. 2 is a perspective view illustrating an example of a state in which a cover of the wrist portion 15 of the robot 1 is attached, FIG. 3 is a perspective view illustrating an example of a state in which the cover of the wrist portion 15 of the robot 1 is removed, FIG. 4 is a cross-sectional view illustrating an example of the configuration of the actuator Ac6 provided in the joint portion J6, and FIG. 5 is a view as viewed from the direction of an arrow A illustrated in FIG. 4, illustrating an example of an arrangement configuration of each of gears of the actuator Ac6.

As described above, the wrist portion 15 (an example of a first arm) and the flange portion 17 (an example of a second arm) are coupled to each other by the joint portion J6 so as to be rotatable around the rotation axis Ax6. As illustrated in FIGS. 2 and 3, the wrist portion 15 includes a bent portion 15a bent in an L-shape. An opening 19 and a cover 21 for closing the opening 19 are provided on an outer side, which has a convex shape, of the bent portion 15a. The cover 21 is fixed to the opening 19 by a plurality of bolts (not illustrated), for example. As illustrated in FIG. 3, in the state in which the cover 21 is removed, the actuator Ac6 provided in the joint portion J6 is exposed. The actuator Ac6 includes a motor 23 and a brake device 27.

FIG. 4 illustrates an example of the configuration of the actuator Ac6. As illustrated in FIG. 4, the actuator Ac6 includes the motor 23, a decelerator 25, the brake device 27, and an intermediate gear device 29.

The motor 23 (an example of a first motor) is housed in the wrist portion 15. The motor 23 includes a motor housing 31 that houses a rotor, a stator, and the like. The motor 23 includes a first gear 35 that is coupled to a motor shaft 33 protruding from the motor housing 31 and rotates around a motor axial center AxM1 (an example of a first axial center). The motor housing 31 is fixed to a housing 15a of the wrist portion 15. A dimension L1 of the motor 23 in the direction of the motor axial center AxM1 is longer than a dimension L2 of the brake device 27 in the direction of a brake axial center AxB1.

The decelerator 25 (an example of a first decelerator) includes a second gear 39 coupled to an input shaft 37, a fixing portion 41, and an output shaft 43 (an example of a first output shaft). The decelerator 25 decelerates rotation of the second gear 39 and transmits the decelerated rotation to the output shaft 43. The input shaft 37 is supported by a bearing 45 so as to be rotatable with respect to the housing 15a of the wrist portion 15, and the second gear 39 rotates around a decelerator axial center AxR1 (an example of a second axial center) in conjunction with the rotation of the first gear 35 of the motor 23. The decelerator axial center AxR1 is parallel to the motor axial center AxM1 and is offset from the motor axial center AxM1 by a predetermined distance. The bearing 45 is attached to the housing 15a in a state in which an appropriate pressure is applied so as to support both a force in a radial direction and a force in a thrust direction acting on the input shaft 37 and the second gear 39. The fixing portion 41 is fixed to the housing 15a of the wrist portion 15. The output shaft 43 is fixed to a housing 17b of the flange portion 17 and rotates around the decelerator axial center AxR1 with respect to the fixing portion 41. The decelerator axial center AxR1 substantially coincides with the rotation axis Ax6 described above.

The decelerator 25 includes a hollow portion 46 (an example of a first hollow portion) extending along the decelerator axial center AxR1, in the second gear 39, the input shaft 37, the fixing portion 41, and the output shaft 43.

The brake device 27 (an example of a first brake device) is housed in the wrist portion 15 such that at least a portion of the brake device 27 faces the motor 23 in a direction perpendicular to the motor axial center AxM1 (the vertical direction in FIG. 4). In the example illustrated in FIG. 4, the whole of the brake device 27 in the axial direction is disposed facing the motor 23. Note that "facing" here means that a region in the motor axial center AxM1 direction in which the motor 23 is disposed, and a region in the brake axial center AxB1 direction in which the brake device 27 is disposed overlap each other when viewed from a direction perpendicular to the motor axial center AxM1 (the brake axial center AxB1). The brake device 27 includes a brake housing 47 that houses an electromagnetic portion and the like, and a third gear 51 that is coupled to a brake shaft 49 protruding from the brake housing 47 and rotates around the brake axial center AxB1 (an example of a third axial center). The brake axial center AxB1 is parallel to the motor axial center AxM1 and the decelerator axial center AxR1, and is offset by a predetermined distance from each of the motor axial center AxM1 and the decelerator axial center AxR1. The third gear 51 rotates in conjunction with the first gear 35 of the motor 23. Thus, the brake device 27 brakes the rotation of the first gear 35 of the motor 23. The brake housing 47 is fixed to the housing 15a of the wrist portion 15.

The intermediate gear device 29 is housed in the wrist portion 15. The intermediate gear device 29 includes a gear housing 53 that houses a bearing and the like, and a fourth gear 57 that is coupled to a gear shaft 55 protruding from the gear housing 53 and rotates around a gear axial center AxG1 (an example of a fourth axial center). The gear axial center AxG1 is parallel to the motor axial center AxM1, the decelerator axial center AxR1, and the brake axial center AxB1, and is offset by a predetermined distance from each of the motor axial center AxM1, the decelerator axial center AxR1, and the brake axial center AxB1. The fourth gear 57 is disposed between the third gear 51 of the brake device 27 and the first gear 35 of the motor 23, and transmits a braking force of the third gear 51 to the first gear 35. The fourth gear 57 is a so-called idler gear. The gear housing 53 is fixed to the housing 15a of the wrist portion 15.

FIG. 5 illustrates the example of the arrangement configuration of each of the gears of the actuator Ac6 as viewed from the direction of the arrow A illustrated in FIG. 4. As illustrated in FIG. 5, the first gear 35 of the motor 23 and the second gear 39 of the decelerator 25 are directly coupled to each other by being meshed with each other. Further, the third gear 51 of the brake device 27 rotates in conjunction with the first gear 35 at a position separated from the second gear 39. Specifically, as a result of the third gear 51 and the fourth gear 57 meshing with each other, and the fourth gear 57 and the first gear 35 meshing with each other, the third gear 51 and the first gear 35 are coupled to each other at the position separated from the second gear 39. The third gear 51 is provided so as to have a gap with the second gear 39, and the fourth gear 57 is provided so as to have a gap with the second gear 39. With the above-described gear configuration, the brake device 27 brakes the rotation of the first gear 35 of the motor 23 via the fourth gear 57. The number of teeth of the third gear 51 is equal to or less than the number of teeth of the first gear 35, so as to be equal to or more than that in a case where the motor axial center AxM1 of the motor 23 and the brake axial center AxB1 of the brake device 27 are coaxially and directly coupled to each other.

Note that the first gear 35 and the second gear 39 need not necessarily be configured to be directly coupled to each other, as long as they are configured to rotate in conjunction with each other. For example, a power transmission mechanism, such as another gear, may be configured to be interposed therebetween. Further, a configuration may be adopted in which the third gear 51 and the first gear 35 are directly meshed with each other without the fourth gear 57 interposed therebetween. Further, a configuration may be adopted in which a plurality of the fourth gears 57 are interposed between the third gear 51 and the first gear 35. Further, when necessary, the number of teeth of the third gear 51 may be larger than the number of teeth of the first gear 35.

### 3. Configuration of Actuator Ac5 of Joint Portion J5

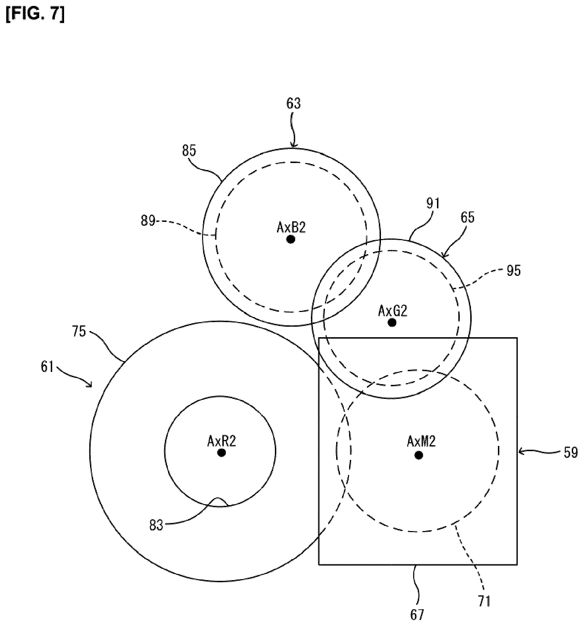

Next, an example of the configuration of the actuator Ac5 provided in the joint portion J5 will be described with reference to FIGS. 3, 6, and 7. FIG. 6 is a cross-sectional view illustrating an example of the configuration of the actuator Ac5 provided in the joint portion J5, and FIG. 7 is a view illustrating an example of an arrangement configuration of each of gears of the actuator Ac5 as viewed from the direction of an arrow B illustrated in FIG. 6.

As described above, the upper arm portion 13 (an example of a third arm) and the wrist portion 15 are coupled to each other by the joint portion J5 so as to be rotatable around the rotation axis Ax5. As illustrated in FIG. 3, in the state in which the cover 21 of the wrist portion 15 is removed, the actuator Ac5 provided in the joint portion J5 is exposed together with the actuator Ac6. The actuator Ac5 includes a motor 59 and a brake device 63. The motor 23 and the brake device 27 of the actuator Ac6 and the motor 59 and the brake device 63 of the actuator Ac5 are disposed so as not to interfere with each other, and are housed in the wrist portion 15.

FIG. 6 shows an example of the configuration of the actuator Ac5. As illustrated in FIG. 6, the actuator Ac5 includes the motor 59, a decelerator 61, the brake device 63, and an intermediate gear device 65.

The motor 59 (an example of a second motor) is housed in the wrist portion 15. The motor 59 includes a motor housing 67 that houses a rotor, a stator, and the like. The motor 59 includes a fifth gear 71 that is coupled to a motor shaft 69 protruding from the motor housing 67 and rotates around a motor axial center AxM2 (an example of a fifth axial center). The motor housing 67 is fixed to the housing 15a of the wrist portion 15. A dimension L3 of the motor 59 in the direction of the motor axial center AxM2 is longer than a dimension L4 of the brake device 63 in the direction of a brake axial center AxB2.

The decelerator 61 (an example of a second decelerator) includes a sixth gear 75 coupled to an input shaft 73, a fixing portion 77, and an output shaft 79 (an example of a second output shaft). The decelerator 61 decelerates rotation of the sixth gear 75 and transmits the decelerated rotation to the output shaft 79. The input shaft 73 is supported by a bearing 81 so as to be rotatable with respect to the housing 15a of the wrist portion 15, and the sixth gear 75 rotates around a decelerator axial center AxR2 (an example of a sixth axial center) in conjunction with the rotation of the fifth gear 71 of the motor 59. The decelerator axial center AxR2 is parallel to the motor axial center AxM2 and is offset from the motor axial center AxM2 by a predetermined distance. The bearing 81 is attached to the housing 15a in a state in which an appropriate pressure is applied so as to support both a force in a radial direction and a force in a thrust direction acting on the input shaft 73 and the sixth gear 75. The fixing portion 77 is fixed to the housing 15a of the wrist portion 15. The output shaft 79 is fixed to a housing 13a of the upper arm portion 13 and rotates around the decelerator axial center AxR2 with respect to the fixing portion 77. The decelerator axial center AxR2 substantially coincides with the rotation axis Ax5 described above.

The decelerator 61 includes a hollow portion 83 (an example of a second hollow portion) extending along the decelerator axial center AxR2, in the sixth gear 75, the input shaft 73, the fixing portion 77, and the output shaft 79.

The brake device 63 (an example of a second brake device) is housed in the wrist portion 15 such that at least a portion of the brake device 63 faces the motor 59 in a direction perpendicular to the motor axial center AxM2 (the vertical direction in FIG. 6). In the example illustrated in FIG. 6, the whole of the brake device 63 in the axial direction is disposed facing the motor 59. Note that "facing" here means that a region in the motor axial center AxM2 direction in which the motor 59 is disposed, and a region in the brake axial center AxB2 direction in which the brake device 63 is disposed overlap each other when viewed from a direction perpendicular to the motor axial center AxM2 (the brake axial center AxB2). The brake device 63 includes a brake housing 85 that houses an electromagnetic portion and the like, and a seventh gear 89 that is coupled to a brake shaft 87 protruding from the brake housing 85 and rotates around a brake axial center AxB2 (an example of a seventh axial center). The brake axial center AxB2 is parallel to the motor axial center AxM2 and the decelerator axial center AxR2, and is offset by a predetermined distance from each of the motor axial center AxM2 and the decelerator axial center AxR2. The seventh gear 89 rotates in conjunction with the fifth gear 71 of the motor 59. Thus, the brake device 63 brakes the rotation of the fifth gear 71 of the motor 59. The brake housing 85 is fixed to the housing 15a of the wrist portion 15.

The intermediate gear device 65 is housed in the wrist portion 15. The intermediate gear device 65 includes a gear housing 91 that houses a bearing and the like, and an eighth gear 95 that is coupled to a gear shaft 93 protruding from the gear housing 91 and rotates around a gear axial center AxG2. The gear axial center AxG2 is parallel to the motor axial center AxM2, the decelerator axial center AxR2, and the brake axial center AxB2, and is offset by a predetermined distance from each of the motor axial center AxM2, the decelerator axial center AxR2, and the brake axial center AxB2. The eighth gear 95 is disposed between the seventh gear 89 of the brake device 63 and the fifth gear 71 of the motor 59, and transmits the braking force of the seventh gear 89 to the fifth gear 71. The eighth gear 95 is a so-called idler gear. The gear housing 91 is fixed to the housing 15a of the wrist portion 15.

FIG. 7 illustrates an example of an arrangement configuration of each of the gears of the actuator Ac5 as viewed from the direction of an arrow B illustrated in FIG. 6. As illustrated in FIG. 7, the fifth gear 71 of the motor 59 and the sixth gear 75 of the decelerator 61 are directly coupled to each other by being meshed with each other. Further, the seventh gear 89 of the brake device 63 rotates in conjunction with the fifth gear 71 at a position separated from the sixth gear 75. Specifically, as a result of the seventh gear 89 and the eighth gear 95 meshing with each other, and the eighth gear 95 and the fifth gear 71 meshing with each other, the seventh gear 89 and the fifth gear 71 are coupled to each other at the position separated from the sixth gear 75. The seventh gear 89 is provided so as to have a gap with the sixth gear 75, and the eighth gear 95 is provided so as to have a gap with the sixth gear 75. With the above-described gear configuration, the brake device 63 brakes the rotation of the fifth gear 71 of the motor 59 via the eighth gear 95. The number of teeth of the seventh gear 89 is equal to or less than the number of teeth of the fifth gear 71 so as to be equal to or more than that in a case where the motor axial center AxM2 of the motor 59 and the brake axial center AxB2 of the brake device 63 are coaxially and directly coupled to each other.

Note that the fifth gear 71 and the sixth gear 75 need not necessarily be configured to be directly coupled to each other, as long as they are configured to rotate in conjunction with each other. For example, a power transmission mechanism, such as another gear, may be configured to be interposed therebetween. Further, a configuration may be adopted in which the seventh gear 89 and the fifth gear 71 are directly meshed with each other without the eighth gear 95 interposed therebetween. Further, a configuration may be adopted in which a plurality of the eighth gears 95 are interposed between the seventh gear 89 and the fifth gear 71. Further, when necessary, the number of teeth of the seventh gear 89 may be larger than the number of teeth of the fifth gear 71.

### 4. Arrangement of Motors and Brake Devices of Actuators Ac5 and Ac6

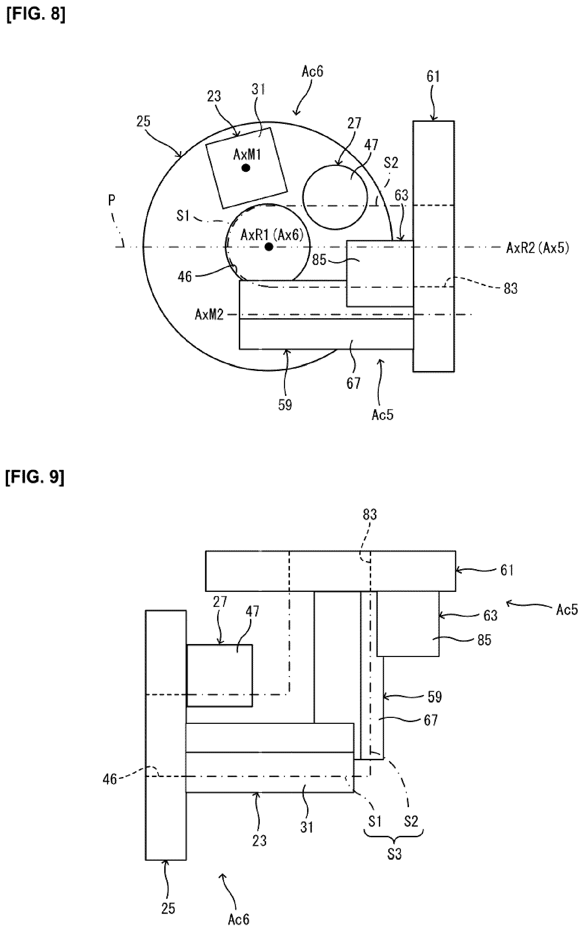

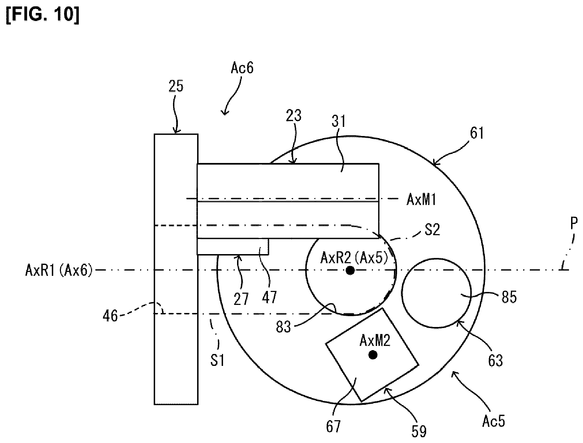

Next, with reference to FIG. 3 and FIGS. 8 to 10, an example will be described of the arrangement of the motors 23 and 59, and the brake devices 27 and 63 of the actuators Ac5 and Ac6 housed in the wrist portion 15. FIG. 8 is an overall view schematically illustrating an example of the arrangement of the motors 23 and 59, and the brake devices 27 and 63 as viewed from the direction of an arrow C illustrated in FIG. 3, FIG. 9 is an overall view schematically illustrating the example of the arrangement of the motors 23 and 59 and the brake devices 27 and 63 as viewed from the direction of an arrow D illustrated in FIG. 3, and FIG. 10 is an overall view schematically illustrating the example of the arrangement of the motors 23 and 59 and the brake devices 27 and 63 as viewed from the direction of an arrow E illustrated in FIG. 3.

As illustrated in FIG. 3 described above, the motor 23 and the brake device 27 constituting the actuator Ac6, and the motor 59 and the brake device 63 constituting the actuator Ac5 are housed in the wrist portion 15 with a different arrangement from each other so as not to interfere with each other.

Specifically, as illustrated in FIGS. 8 to 10, the motor housing 31 of the motor 23 and the brake housing 47 of the brake device 27 are provided so as to protrude from the decelerator 25 along the direction of the decelerator axial center AxR1 (the rotation axis Ax6). Further, the motor housing 67 of the motor 59 and the brake housing 85 of the brake device 63 are provided so as to protrude from the decelerator 61 along the direction of the decelerator axial center AxR2 (the rotation axis Ax5).

As illustrated in FIG. 8, the motor housing 31 (an example of a first housing) of the motor 23 is disposed on an outer side in a radial direction of a substantially cylindrical wiring space S1 (an example of a first space) formed by extending the hollow portion 46 of the decelerator 25 in the direction of the decelerator axial center AxR1. Similarly, the brake housing 47 (an example of a second housing) of the brake device 27 is disposed on the outer side in the radial direction of the wiring space S1.

As illustrated in FIG. 10, the motor housing 67 (an example of a third housing) of the motor 59 is disposed on an outer side in a radial direction of a substantially cylindrical wiring space S2 (an example of a second space) formed by extending the hollow portion 83 of the decelerator 61 in the direction of the decelerator axial center AxR2. Similarly, the brake housing 85 (an example of a fourth housing) of the brake device 63 is disposed on the outer side in the radial direction of the wiring space S2.

As illustrated in FIG. 9, when the wiring space S1 and the wiring space S2 are connected to each other, a wiring space S3 (an example of a third space) having a bent shape is formed. A cable or the like inserted through the hollow portions 46 and 83 is wired through the wiring space S3 inside the wrist portion 15. As illustrated in FIGS. 8 to 10, the motor housing 31 of the motor 23, the brake housing 47 of the brake device 27, the motor housing 67 of the motor 59, and the brake housing 85 of the brake device 63 are disposed so as not to interfere with each other and so as not to interfere with the wiring space S3.

As illustrated in FIGS. 8 and 10, the decelerator axial center AxR1 (the rotation axis Ax6) of the decelerator 25 and the decelerator axial center AxR2 (the rotation axis Ax5) of the decelerator 61 intersect at a predetermined angle on a mutual plane P that includes both of the decelerator axial centers AxR1 and AxR2. The predetermined angle is approximately 90 degrees, for example, but the decelerator axial center AxR1 and the decelerator axial center AxR2 may intersect at an angle other than 90 degrees. The motor axial center AxM1 of the motor 23 is disposed on one side (the upper side in FIGS. 8 and 10) of the plane P, and the motor axial center AxM2 of the motor 59 is disposed on the other side (the lower side in FIGS. 8 and 10) of the plane P.

Further, in order to dispose the brake device 27 so as not to interfere with the two motors 23 and 59, the other brake device 63, and the wiring space S3, the fourth gear 57, which adjusts the relative position between the motor 23 and the brake device 27, may be provided. Similarly, in order to dispose the brake device 63 so as not to interfere with the two motors 23 and 59, the other brake device 27, and the wiring space S3, the eighth gear 95, which adjusts the relative position between the motor 59 and the brake device 63, may be provided.

A method for manufacturing the robot 1 having the above-described configuration includes assembling, with respect to the motor 23 and the decelerator 25, the brake device 27 such that the brake device 27 faces the motor 23 in the direction perpendicular to the motor axial center AxM1, the brake axial center AxB1 is parallel to the motor axial center AxM1 and the decelerator axial center AxR1 and is separated from each of the motor axial center AxM1 and the decelerator axial center AxR1, and the third gear 51 rotates in conjunction with the first gear 35 at a position separated from the second gear 39, wherein the brake device 27 includes the third gear 51 that rotates around the brake axial center AxB1, and brakes the rotation of the first gear 35, the motor 23 is housed in the wrist portion 15 and includes the first gear 35 that rotates around the motor axial center AxM1, and the decelerator 25 decelerates the rotation of the second gear 39 and transmits the decelerated rotation to the output shaft 43, the decelerator 25 including the second gear 39 that rotates, in conjunction with the rotation of the first gear 35, around the decelerator axial center AxR1 parallel to the motor axial center AxM1 and offset from the motor axial center AxM1, and the output shaft 43 coupled to the flange portion 17.

### 5. Effects of Embodiment

As described above, with the robot 1 according to the present embodiment, as a result of the motor 23 housed in the wrist portion 15 rotating the first gear 35 around the motor axial center AxM1, the second gear 39 of the decelerator 25 rotates in conjunction with the rotation, and the rotation of the second gear 39 is decelerated and transmitted to the output shaft 43 coupled to the flange portion 17. Thus, the flange portion 17 rotates with respect to the wrist portion 15. Further, as a result of the brake device 27 rotating the third gear 51, which rotates in conjunction with the first gear 35 at the position separated from the second gear 39, around the brake axial center AxB1 that is parallel to and offset from the motor axial center AxM1, the rotation of the first gear 35 is braked. According to the present embodiment, the motor 23 and the brake device 27 are disposed so as to be offset from each other and to face each other in the direction perpendicular to the motor axial center AxM1 (the brake axial center AxB1). Accordingly, it is possible to reduce the dimension, in the axial direction, of the actuator Ac6 including the motor 23, the decelerator 25, and the brake device 27. Thus, the wrist portion 15 housing the actuator Ac6 can be downsized. Note that, for the actuator Ac5 also, the same effects can be obtained by using the same configuration described above.

Further, in the present embodiment, the third gear 51 of the brake device 27 need not necessarily be coupled to the second gear 39 of the decelerator 25, and the first gear 35 of the motor 23 may be coupled to the second gear 39 of the decelerator 25. In other words, the third gear 51 of the brake device 27 may be coupled to the first gear 35 of the motor 23 without the second gear 39 of the decelerator 25 being interposed therebetween. In this case, it is possible to reduce a turbulence factor imparted to the second gear 39 of the decelerator 25 by the behavior of the third gear 51 of the brake device 27 resulting from play of the gear or the like. Further, since the number of gears coupled to the second gear 39 of the decelerator 25 can be reduced, wear of the second gear 39 can be reduced. Note that, for the actuator Ac5 also, the same effects can be obtained by using the same configuration described above.

Note that, in the above-described case, since the second gear 39 of the decelerator 25 and the third gear 51 (the fourth gear 57 in the above-described embodiment) of the brake device 27 are coupled to the first gear 35 of the motor 23, there is a possibility that wear of the first gear 35 may increase. However, since the motor 23 is exposed by removing the cover 21 and is easily removed, the first gear 35 is easily replaced. On the other hand, since the decelerator 25 cannot be removed unless the motor 23, the brake device 27, and the like are removed after the cover 21 is removed, it takes time and effort to replace the second gear 39 of the decelerator 25. Therefore, the configuration of the present embodiment has an advantage that maintenance is easier compared to a case in which both the first gear 35 of the motor 23 and the third gear 51 of the brake device 27 are coupled to the second gear 39 of the decelerator 25, for example. Note that, for the actuator Ac5 also, the same effects can be obtained by using the same configuration described above.

Further, in the present embodiment, the dimension L1 of the motor 23 in the direction of the motor axial center AxM1 may be made longer than the dimension L2 of the brake device 27 in the direction of the brake axial center AxB1. In this case, since the dimension of the brake device 27 in the direction of the motor axial center AxM1 (the brake axial center AxB1) can be kept within the dimension of the motor 23, the dimension in the axial direction of the actuator Ac6 can be further downsized. Note that, for the actuator Ac5 also, the same effects can be obtained by using the same configuration described above.

Further, in the present embodiment, the decelerator 25 may include the hollow portion 46 extending along the decelerator axial center AxR1 in the second gear 39 and the output shaft 43. The motor 23 may include the motor housing 31 disposed on the outer side in the radial direction of the wiring space S1 formed by extending the hollow portion 46 in the direction of the decelerator axial center AxR1, and the brake device 27 may include the brake housing 47 disposed on the outer side in the radial direction of the wiring space S1. In this case, since the decelerator 25 includes the hollow portion 46, a cable or the like can be wired through the decelerator 25. Further, since the motor housing 31 of the motor 23 and the brake housing 47 of the brake device 27 are disposed on the outer side in the radial direction of the wiring space S1 that is formed by extending the hollow portion 46, it is possible to suppress the cable and the like drawn out from the hollow portion 46 from interfering with the motor housing 31 and the brake housing 47. Thus, a space for passing the cable or the like pulled out from the hollow portion 46 can be secured in the wrist portion 15. Note that, for the actuator Ac5 also, the same effects can be obtained by using the same configuration described above.

Further, in the present embodiment, the fourth gear 57 that transmits the braking force of the third gear 51 to the first gear 35 may be provided. In this case, since the fourth gear 57 is interposed between the first gear 35 of the motor 23 and the third gear 51 of the brake device 27, a distance between the motor axial center AxM1 and the brake axial center AxB1 can be adjusted. Thus, it is possible to arrange the motor 23 and the brake device 27 so that the motor housing 31 and the brake housing 47 do not interfere with each other while suppressing the sizes of the first gear 35 and the third gear 51, or to arrange the motor 23 and the brake device 27 so that the motor housing 31 and the brake housing 47 do not interfere with the wiring space S1 formed by extending the hollow portion 46. Thus, a freedom of the arrangement of the motor 23 and the brake device 27 can be improved. Note that, for the actuator Ac5 also, the same effects can be obtained by using the same configuration described above.

Further, in the present embodiment, the number of teeth of the third gear 51 may be equal to or less than the number of teeth of the first gear 35. In this case, the braking torque by the brake device 27 can be increased. In this way, for example, it is possible to apply a braking torque equal to or greater than that in a case in which a brake unit similar to the brake device 27 is provided on the anti-load side of the motor 23 (a motor with a brake mechanism). Note that, for the actuator Ac5 also, the same effects can be obtained by using the same configuration described above.

Further, in the present embodiment, the motor 23 and the brake device 27 that relatively drive or stop the wrist portion 15 and the flange portion 17, and the motor 59 and the brake device 63 that relatively drive or stop the wrist portion 15 and the upper arm portion 13 may be housed in the wrist portion 15 with a different arrangement from each other so as not to interfere with each other. In this case, a space in the wrist portion 15 can be effectively utilized to compactly house each of the devices. Further, each of the motor 23, the brake device 27, the motor 59, and the brake device 63 may be disposed so as not to interfere with the wiring space S3 having the bent shape and obtained by connecting the wiring space S1 and the wiring space S2. In this case, a space for passing the cable or the like drawn between the hollow portion 46 and the hollow portion 83 can be secured in the wrist portion 15.

Further, in the present embodiment, the motor axial center AxM1 of the motor 23 may be disposed on one side of the plane P including the decelerator axial center AxR1 and the decelerator axial center AxR2 that intersect each other, and the motor axial center AxM2 of the motor 59 may be disposed on the other side of the plane P. In this case, space for housing the motor 23 and the motor 59 can be made compact while suppressing interference between the motor 23 and the motor 59.

### 6. Modified Examples

The embodiment of the present disclosure is not limited to the above, and various modifications are possible without departing from the scope of the appended claims.

In the above description, the configuration of the above-described embodiment is applied to the actuator Ac6 provided in the joint portion J6 that rotatably couples the wrist portion 15 and the flange portion 17, of the arm 7 of the robot 1, or to the actuator Ac5 provided in the joint portion J5 that rotatably couples the wrist portion 15 and the upper arm portion 13, of the arm 7 of the robot 1. However, the application location is not limited to the actuators Ac5 and Ac6. The configuration of the above-described embodiment may be applied to other portions of the arm 7, such as the actuator Ac4 of the joint portion J4 that rotatably couples the elbow portion 11 and the upper arm portion 13, and the actuator Ac3 of the joint portion J3 that rotatably couples the elbow portion 11 and the lower arm portion 9.

In the above description, the configuration of the above-described embodiment is applied to both the actuators Ac5 and Ac6, but may be applied to only one of the actuators Ac5 and Ac6.

In the above description, when "perpendicular", "parallel", "planar", and the like are used, the meanings are not construed strictly. That is, "perpendicular", "parallel", and "planar" mean "substantially perpendicular", "substantially parallel", and "substantially planar", respectively, with allowance for design and manufacturing tolerances and errors.

In the above description, when "the same", "identical", "equal", "different" and the like are used in reference to the external dimensions and sizes, shapes, positions, or the like, the meanings are not construed strictly. That is, "the same", "identical", "equal", and "different" mean "substantially the same", "substantially identical", "substantially equal", and "substantially different", respectively, with allowance for design and manufacturing tolerances and errors.

### REFERENCE SIGNS LIST

1 Robot
13 Upper arm portion (example of third arm)
15 Wrist portion (example of first arm)
17 Flange portion (example of second arm)
23 Motor (example of first motor)
25 Decelerator (example of first decelerator)
27 Brake device (example of first brake device)
29 Intermediate gear device
31 Motor housing (example of first housing)
35 First gear
39 Second gear
43 Output shaft (example of first output shaft)
46 Hollow portion
47 Brake housing (example of second housing)
51 Third gear
57 Fourth gear
59 Motor (example of second motor)
61 Decelerator (example of second decelerator)
63 Brake device (example of second brake device)
65 Intermediate gear device
67 Motor housing (example of third housing)
71 Fifth gear
75 Sixth gear
79 Output shaft (example of second output shaft)
83 Hollow portion (example of second hollow portion)
85 Brake housing (example of fourth housing)
89 Seventh gear
95 Eighth gear
AxB1 Brake axial center (example of third axial center)
AxB2 Brake axial center (example of seventh axial center)
AxG1 Gear axial center (example of fourth axial center)
AxG2 Gear axial center
AxM1 Motor axial center (example of first axial center)
AxM2 Motor axial center (example of fifth axial center)
AxR1 Decelerator axial center (example of second axial center)
AxR2 Decelerator axial center (example of sixth axial center)
L1 Dimension
L2 Dimension
L3 Dimension
L4 Dimension
P Plane
S1 Wiring space (an example of a first space)
S2 Wiring space (an example of a second space)
S3 Wiring space (an example of a third space)

## Claims

1. A robot (1) comprising:
a first arm (15);
a second arm (17) rotatably coupled to the first arm (15);
a first motor (23) housed in the first arm (15) and including a first gear (35) configured to rotate around a first axial center (AxM1);
a first decelerator (25) configured to decelerate rotation of a second gear (39) and transmit the decelerated rotation to a first output shaft (43), the first decelerator (25) including the second gear (39) configured to rotate, in conjunction with rotation of the first gear (35), around a second axial center (AxR1) parallel to the first axial center (AxM1) and offset from the first axial center (AxM1), and the first output shaft (43) coupled to the second arm (17); and
a first brake device (27) configured to brake the rotation of the first gear (35), the first brake device (27) being housed in the first arm (15) to face the first motor (23) in a direction perpendicular to the first axial center (AxM1), and including a third gear (51) configured to rotate around a third axial center (AxB1) parallel to the first axial center (AxM1) and the second axial center (AxR1) and offset from each of the first axial center (AxM1) and the second axial center (AxR1), and rotate in conjunction with the first gear (35) at a position separated from the second gear (39),
wherein
the first gear (35) is coupled to the second gear (39), and
wherein the robot is **characterized in that**:
the third gear (51) is provided with a gap between the third gear (51) and the second gear (39).

2. The robot (1) according to claim 1, wherein
a dimension of the first motor (23) in a direction of the first axial center (AxM1) is longer than a dimension of the first brake device (27) in a direction of the third axial center (AxB1).

3. The robot (1) according to claim 1, wherein
the first decelerator (25) includes a first hollow portion (46) extending along the second axial center (AxR1), in the second gear (39) and the first output shaft (43),
the first motor (23) includes a first housing (31) disposed on an outer side in a radial direction of a first space (S1) formed by extending the first hollow portion (46) in a direction of the second axial center (AxR1), and
the first brake device (27) includes a second housing (47) disposed on the outer side in the radial direction of the first space (S1).

4. The robot (1) according to claim 3, comprising:
at least one fourth gear (57) configured to rotate around a fourth axial center (AxG1) parallel to the first axial center (AxM1), the second axial center (AxR1), and the third axial center (AxB1) and offset from each of the first axial center (AxM1), the second axial center (AxR1), and the third axial center (AxB1), and transmit a braking force of the third gear (51) to the first gear (35), the at least one fourth gear (57) being housed in the first arm (15).

5. The robot (1) according to claim 1, wherein
the number of teeth of the third gear (51) is equal to or less than the number of teeth of the first gear (35).

6. The robot (1) according to claim 3, further comprising:
a third arm (13) rotatably coupled to the first arm (15) at a position different from a position of the second arm (17);
a second motor (59) housed in the first arm (15) and including a fifth gear (71) configured to rotate around a fifth axial center (AxM2);
a second decelerator (61) configured to decelerate rotation of a sixth gear (75) and transmit the decelerated rotation to a second output shaft (79), the second decelerator (61) including the sixth gear (75) configured to rotate, in conjunction with rotation of the fifth gear (71), around a sixth axial center (AxR2) parallel to the fifth axial center (AxM2), offset from the fifth axial center (AxM2), and intersecting the second axial center (AxR1), and the second output shaft (79) coupled to the third arm (13); and
a second brake device (63) configured to brake the rotation of the fifth gear (71), the second brake device (63) being housed in the first arm (15) to face the second motor (59) in a direction perpendicular to the fifth axial center (AxM2), and including a seventh gear (89) configured to rotate around a seventh axial center (AxB2) parallel to the fifth axial center (AxM2) and the sixth axial center (AxR2) and offset from each of the fifth axial center (AxM2) and the sixth axial center (AxR2), and rotate in conjunction with the fifth gear (71) at a position separated from the sixth gear (75), wherein
the second decelerator (61) includes a second hollow portion (83) extending along the sixth axial center (AxR2), in the sixth gear (75) and the second output shaft (79),
the second motor (59) includes a third housing (67) disposed on an outer side in a radial direction of a second space (S2) formed by extending the second hollow portion (83) in a direction of the sixth axial center (AxR2),
the second brake device (63) includes a fourth housing (85) disposed on the outer side in the radial direction of the second space (S2), and
each of the first motor (23), the first brake device (27), the second motor (59), and the second brake device (63) is disposed to not interfere with a third space (S3) having a bent shape and connecting the first space (S1) and the second space (S2).

7. The robot (1) according to claim 6, wherein
the first axial center (AxM1) of the first motor (23) is disposed on one side of a plane including the second axial center (AxR1) and the sixth axial center (AxR2) intersecting each other, and
the fifth axial center (AxM2) of the second motor (59) is disposed on another side of the plane.

8. A method for manufacturing a robot (1) including a first arm (15) and a second arm (17) rotatably coupled to the first arm (15), the method comprising:
assembling, with respect to a first motor (23) and a first decelerator (25), a first brake device (27) such that the first brake device (27) faces the first motor (23) in a direction perpendicular to a first axial center (AxM1), a third axial center (AxB1) is parallel to the first axial center (AxM1) and a second axial center (AxR1), and is separated from each of the first axial center (AxM1) and the second axial center (AxR1), and a third gear (51) rotates in conjunction with a first gear (35) at a position separated from a second gear (39), wherein the first brake device (27) includes the third gear (51) configured to rotate around the third axial center (AxB1) and brake rotation of the first gear (35), the first motor (23) is housed in the first arm (15) and includes the first gear (35) configured to rotate around the first axial center (AxM1), and the first decelerator (25) is configured to decelerate rotation of the second gear (39) and transmit the decelerated rotation to a first output shaft (43), the first decelerator (25) including the second gear (39) configured to rotate, in conjunction with the rotation of the first gear (35), around the second axial center (AxR1) parallel to the first axial center (AxM1) and offset from the first axial center (AxM1), and the first output shaft (43) coupled to the second arm (17),
wherein
the first gear (35) is coupled to the second gear (39), and
wherein the method is **characterized in that** it further comprises the step of:
providing a gap between the third gear (51) and the second gear (39).

## Patentansprüche

1. Roboter (1), umfassend:
einen ersten Arm (15);
einen zweiten Arm (17), der drehbar an den ersten Arm (15) gekoppelt ist;
einen ersten Motor (23), der in dem ersten Arm (15) untergebracht ist und ein erstes Zahnrad (35) umfasst, das dazu ausgestaltet ist, sich um eine erste axiale Mitte (AxM1) zu drehen;
ein erstes Untersetzungsgetriebe (25), das dazu ausgestaltet ist, Drehung eines zweiten Zahnrads (39) zu verlangsamen und die verlangsamte Drehung auf eine erste Abtriebswelle (43) zu übertragen, wobei das erste Untersetzungsgetriebe (25) das zweite Zahnrad (39), das dazu ausgestaltet ist, sich zusammen mit einer Drehung des ersten Zahnrads (35) um eine zweite axiale Mitte (AxR1) parallel zur ersten axialen Mitte (AxM1) und versetzt von der ersten axialen Mitte (AxM1) zu drehen, und die erste Abtriebswelle (43) umfasst, die an den zweiten Arm (17) gekoppelt ist; und
eine erste Bremsvorrichtung (27), die dazu ausgestaltet ist, die Drehung des ersten Zahnrads (35) zu bremsen, wobei die erste Bremsvorrichtung (27) derart in dem ersten Arm (15) untergebracht ist, dass sie dem ersten Motor (23) in einer Richtung senkrecht zur ersten axialen Mitte (AxM1) zugewandt ist, und ein drittes Zahnrad (51) umfasst, das dazu ausgestaltet ist, sich um eine dritte axiale Mitte (AxB1) parallel zur ersten axialen Mitte (AxM1) und zur zweiten axialen Mitte (AxR1) und versetzt von jeder von der ersten axialen Mitte (AxM1) und der zweiten axialen Mitte (AxR1) zu drehen und sich zusammen mit dem ersten Zahnrad (35) an einer Position zu drehen, die von dem zweiten Zahnrad (39) getrennt ist,
wobei das erste Zahnrad (35) an das zweite Zahnrad (39) gekoppelt ist und wobei der Roboter **dadurch gekennzeichnet ist, dass**:
das dritte Zahnrad (51) mit einer Lücke zwischen dem dritten Zahnrad (51) und dem zweiten Zahnrad (39) bereitgestellt ist.

2. Roboter (1) nach Anspruch 1, wobei
eine Abmessung des ersten Motors (23) in einer Richtung der ersten axialen Mitte (AxM1) länger als eine Abmessung der ersten Bremsvorrichtung (27) in einer Richtung der dritten axialen Mitte (AxB1) ist.

3. Roboter (1) nach Anspruch 1, wobei
das erste Untersetzungsgetriebe (25) einen ersten hohlen Abschnitt (46) umfasst, der sich entlang der zweiten axialen Mitte (AxR1) in dem zweiten Zahnrad (39) und der ersten Abtriebswelle (43) erstreckt,
der erste Motor (23) ein erstes Gehäuse (31) umfasst, das auf einer Außenseite in einer radialen Richtung eines ersten Raums (S1) angeordnet ist, der mittels Verlängerns des ersten hohlen Abschnitts (46) in einer Richtung der zweiten axialen Mitte (AxR1) gebildet ist, und
die erste Bremsvorrichtung (27) ein zweites Gehäuse (47) umfasst, das auf der Außenseite in der radialen Richtung des ersten Raums (S1) angeordnet ist.

4. Roboter (1) nach Anspruch 3, umfassend:
mindestens ein viertes Zahnrad (57), das dazu ausgestaltet ist, sich um eine vierte axiale Mitte (AxG1) parallel zur ersten axialen Mitte (AxM1), zur zweiten axialen Mitte (AxR1) und zur dritten axialen Mitte (AxB1) und versetzt von jeder von der ersten axialen Mitte (AxM1), der zweiten axialen Mitte (AxR1) und der dritten axialen Mitte (AxB1) zu drehen und eine Bremskraft des dritten Zahnrads (51) auf das erste Zahnrad (35) zu übertragen, wobei das mindestens eine vierte Zahnrad (57) in dem ersten Arm (15) untergebracht ist.

5. Roboter (1) nach Anspruch 1, wobei
die Anzahl der Zähne des dritten Zahnrads (51) gleich oder kleiner als die Anzahl der Zähne des ersten Zahnrads (35) ist.

6. Roboter (1) nach Anspruch 3, ferner umfassend:
einen dritten Arm (13), der drehbar an den ersten Arm (15) an einer Position gekoppelt ist, die sich von einer Position des zweiten Arms (17) unterscheidet;
einen zweiten Motor (59), der in dem ersten Arm (15) untergebracht ist und ein fünftes Zahnrad (71) umfasst, das dazu ausgestaltet ist, sich um eine fünfte axiale Mitte (AxM2) zu drehen;
ein zweites Untersetzungsgetriebe (61), das dazu ausgestaltet ist, Drehung eines sechsten Zahnrads (75) zu verlangsamen und die verlangsamte Drehung auf eine zweite Abtriebswelle (79) zu übertragen, wobei das zweite Untersetzungsgetriebe (61) das sechste Zahnrad (75), das dazu ausgestaltet ist, sich zusammen mit Drehung des fünften Zahnrads (71) um eine sechste axiale Mitte (AxR2) parallel zur fünften axialen Mitte (AxM2) versetzt von der fünften axialen Mitte (AxM2) und die zweite axiale Mitte (AxR1) schneidend zu drehen, und die zweite Abtriebswelle (79) umfasst, die an den dritten Arm (13) gekoppelt ist; und
eine zweite Bremsvorrichtung (63), die dazu ausgestaltet ist, die Drehung des fünften Zahnrads (71) zu bremsen, wobei die zweite Bremsvorrichtung (63) derart in dem ersten Arm (15) untergebracht ist, dass sie dem zweiten Motor (59) in einer Richtung senkrecht zur fünften axialen Mitte (AxM2) zugewandt ist, und ein siebtes Zahnrad (89) umfasst, das dazu ausgestaltet ist, sich um eine siebte axiale Mitte (AxB2) parallel zur fünften axialen Mitte (AxM2) und zur sechsten axialen Mitte (AxR2) und von jeder von der fünften axialen Mitte (AxM2) und der sechsten axialen Mitte (AxR2) versetzt zu drehen und sich zusammen mit dem fünften Zahnrad (71) an einer Position zu drehen, die von dem sechsten Zahnrad (75) getrennt ist, wobei
das sechste Untersetzungsgetriebe (61) einen zweiten hohlen Abschnitt (83) umfasst, der sich entlang der sechsten axialen Mitte (AxR2) in dem sechsten Zahnrad (75) und der zweiten Abtriebswelle (79) erstreckt,
der zweite Motor (59) ein drittes Gehäuse (67) umfasst, das auf einer Außenseite in einer radialen Richtung eines zweiten Raums (S2) angeordnet ist, der durch Verlängern des zweiten hohlen Abschnitts (83) in einer Richtung der sechsten axialen Mitte (AxR2) gebildet ist,
die zweite Bremsvorrichtung (63) ein viertes Gehäuse (85) umfasst, das auf der Außenseite in der radialen Richtung des zweiten Raums (S2) angeordnet ist, und
jede/r von dem ersten Motor (23), der ersten Bremsvorrichtung (27), dem zweiten Motor (59) und der zweiten Bremsvorrichtung (63) derart angeordnet ist, dass er bzw. sie nicht in einen dritten Raum (S3) hineinragt, der eine gebogene Form aufweist und den ersten Raum (S1) und den zweiten Raum (S2) verbindet.

7. Roboter (1) nach Anspruch 6, wobei
die erste axiale Mitte (AxM1) des ersten Motors (23) auf einer Seite einer Ebene angeordnet ist, die eine zweite axiale Mitte (AxR1) und die sechste axiale Mitte (AxR2) umfasst, die einander schneiden, und
die fünfte axiale Mitte (AxM2) des zweiten Motors (59) auf einer anderen Seite der Ebene angeordnet ist.

8. Verfahren zur Herstellung eines Roboters (1), der einen ersten Arm (15) und einen zweiten Arm (17) umfasst, der drehbar an den ersten Arm (15) gekoppelt ist, wobei das Verfahren umfasst:
Zusammenbauen, in Bezug auf einen ersten Motor (23) und ein erstes Untersetzungsgetriebe (25), einer ersten Bremsvorrichtung (27), derart dass die erste Bremsvorrichtung (27) dem ersten Motor (23) in einer Richtung senkrecht zu einer ersten axialen Mitte (AxM1) zugewandt ist, eine dritte axiale Mitte (AxB1) parallel zur ersten axialen Mitte (AxM1) und einer zweiten axialen Mitte (AxR1) ist und von jeder von der ersten axialen Mitte (AxM1) und der zweiten axialen Mitte (AxR1) getrennt ist, und ein drittes Zahnrad (51) sich zusammen mit einem ersten Zahnrad (35) an einer Position, die von einem zweiten Zahnrad (39) getrennt ist, wobei die erste Bremsvorrichtung (27) das dritte Zahnrad (51) umfasst, das dazu ausgestaltet ist, sich um die dritte axiale Mitte (AxB1) zu drehen, und Bremsdrehung des ersten Zahnrads (35) dreht, der erste Motor (23) im ersten Arm (15) untergebracht ist und das erste Zahnrad (35) umfasst, das dazu ausgestaltet ist, sich um die erste axiale Mitte (AxM1) zu drehen, und das erste Untersetzungsgetriebe (25) dazu ausgestaltet ist, Drehung des zweiten Zahnrads (39) zu verlangsamen und die verlangsamte Drehung auf eine erste Abtriebswelle (43) zu übertragen, wobei das erste Untersetzungsgetriebe (25) das zweite Zahnrad (39), das dazu ausgestaltet ist, sich zusammen mit der Drehung des ersten Zahnrads (35) um die zweite axiale Mitte (AxR1) parallel zur ersten axialen Mitte (AxM1) und versetzt von der ersten axialen Mitte (AxM1) zu drehen, und die erste Abtriebswelle (43) umfasst, die an den zweiten Arm (17) gekoppelt ist,
wobei das erste Zahnrad (35) an das zweite Zahnrad (39) gekoppelt ist, und
wobei das Verfahren **dadurch gekennzeichnet ist, dass** es ferner den folgenden Schritt umfasst:
Bereitstellen einer Lücke zwischen dem dritten Zahnrad (51) und dem zweiten Zahnrad (39).

## Revendications

1. Robot (1) comprenant :
un premier bras (15) ;
un deuxième bras (17) couplé, en rotation, au premier bras (15) ;
un premier moteur (23) logé dans le premier bras (15) et comprenant un premier engrenage (35) configuré pour tourner autour d'un premier centre axial (AxM1) ;
un premier décélérateur (25) configuré pour décélérer la rotation d'un deuxième engrenage (39) et transmettre la rotation décélérée à un premier arbre de sortie (43), le premier décélérateur (25) comprenant le deuxième engrenage (39) configuré pour tourner, conjointement avec la rotation du premier engrenage (35), autour d'un deuxième centre axial (AxR1) parallèle au premier centre axial (AxM1) et décalé du premier centre axial (AxM1), et le premier arbre de sortie (43) couplé au deuxième bras (17) ; et
un premier dispositif de frein (27) configuré pour freiner la rotation du premier engrenage (35), le premier dispositif de frein (27) étant logé dans le premier bras (15) pour faire face au premier moteur (23) dans une direction perpendiculaire au premier centre axial (AxM1) et comprenant un troisième engrenage (51) configuré pour tourner autour d'un troisième centre axial (AxB1) parallèle au premier centre axial (AxM1) et au deuxième centre axial (AxR1) et décalé de chacun parmi le premier centre axial (AxM1) et le deuxième centre axial (AxR1) et tourner conjointement avec le premier engrenage (35) dans une position séparée du deuxième engrenage (39), dans lequel :
le premier engrenage (35) est couplé au deuxième engrenage (39), et
dans lequel le robot est **caractérisé en ce que** :
le troisième engrenage (51) est prévu avec un interstice entre le troisième engrenage (51) et le deuxième engrenage (39).

2. Robot (1) selon la revendication 1, dans lequel :
une dimension du premier moteur (23) dans une direction du premier centre axial (AxM1) est plus longue qu'une dimension du premier dispositif de frein (27) dans une direction du troisième centre axial (AxB1).

3. Robot (1) selon la revendication 1, dans lequel :
le premier décélérateur (25) comprend une première partie creuse (46) s'étendant le long du deuxième centre axial (AxR1), dans le deuxième engrenage (39) et le premier arbre de sortie (43),
le premier moteur (23) comprend un premier boîtier (31) disposé sur un côté externe dans une direction radiale d'un premier espace (S1) formé en étendant la première partie creuse (46) dans une direction du deuxième centre axial (AxR1), et
le premier dispositif de frein (27) comprend un deuxième boîtier (47) disposé sur le côté externe dans la direction radiale du premier espace (S1).

4. Robot (1) selon la revendication 3, comprenant :
au moins un quatrième engrenage (57) configuré pour tourner autour d'un quatrième centre axial (AxG1) parallèle au premier centre axial (AxM1), au deuxième centre axial (AxR1) et au troisième centre axial (AxB1) et décalé par rapport à chacun parmi le premier centre axial (AxM1), le deuxième centre axial (AxR1) et le troisième centre axial (AxB1), et transmettre une force de freinage du troisième engrenage (51) au premier engrenage (35), le au moins un quatrième engrenage (57) étant logé dans le premier bras (15).

5. Robot (1) selon la revendication 1, dans lequel :
le nombre de dents du troisième engrenage (51) est égal ou inférieur au nombre de dents du premier engrenage (35).

6. Robot (1) selon la revendication 3, comprenant en outre :
un troisième bras (13) couplé, en rotation, au premier bras (15) dans une position différente d'une position du deuxième bras (17) ;
un second moteur (59) logé dans le premier bras (15) et comprenant un cinquième engrenage (71) configuré pour tourner autour d'un cinquième centre axial (AxM2) ;
un second décélérateur (61) configuré pour décélérer la rotation d'un sixième engrenage (75) et transmettre la rotation décélérée à un second arbre de sortie (79), le second décélérateur (61) comprenant le sixième engrenage (75) configuré pour tourner, conjointement avec la rotation du cinquième engrenage (71), autour d'un sixième centre axial (AxR2) parallèle au cinquième centre axial (AxM2), décalé par rapport au cinquième centre axial (AxM2) et coupant le deuxième centre axial (AxR1), et le second arbre de sortie (79) couplé au troisième bras (13) ; et
un second dispositif de frein (63) configuré pour freiner la rotation du cinquième engrenage (71), le second dispositif de frein (63) étant logé dans le premier bras (15) afin de faire face au second moteur (59) dans une direction perpendiculaire au cinquième centre axial (AxM2) et comprenant un septième engrenage (89) configuré pour tourner autour d'un septième centre axial (AxB2) parallèle au cinquième centre axial (AxM2) et au sixième centre axial (AxR2) et décalé par rapport à chacun parmi le cinquième centre axial (AxM2) et le sixième centre axial (AxR2) et tourner conjointement avec le cinquième engrenage (71) dans une position séparée du sixième engrenage (75), dans lequel :
le second décélérateur (61) comprend une seconde partie creuse (83) s'étendant le long du sixième centre axial (AxR2), dans le sixième engrenage (75) et le second arbre de sortie (79),
le second moteur (59) comprend un troisième boîtier (67) disposé sur un côté externe dans une direction radiale d'un deuxième espace (S2) formé en étendant la seconde partie creuse (83) dans une direction du sixième centre axial (AxR2),
le second dispositif de frein (63) comprend un quatrième boîtier (85) disposé sur le côté externe dans la direction radiale du deuxième espace (S2), et
chacun parmi le premier moteur (23), le premier dispositif de frein (27), le second moteur (59) et le second dispositif de frein (63) est disposé pour ne pas interférer avec un troisième espace (S3) ayant une forme courbée et raccordant le premier espace (S1) et le deuxième espace (S2).

7. Robot (1) selon la revendication 6, dans lequel :
le premier centre axial (AxM1) du premier moteur (23) est disposé sur un côté d'un plan comprenant le deuxième centre axial (AxR1) et le sixième centre axial (AxR2) qui se coupent, et
le cinquième centre axial (AxM2) du second moteur (59) est disposé sur un autre côté du plan.

8. Procédé pour fabriquer un robot (1) comprenant un premier bras (15) et un deuxième bras (17) couplé en rotation au premier bras (15), le procédé comprenant l'étape consistant à :
assembler, par rapport à un premier moteur (23) et à un premier décélérateur (25), un premier dispositif de frein (27) de sorte que le premier dispositif de frein (27) fait face au premier moteur (23) dans une direction perpendiculaire à un premier centre axial (AxM1), un troisième centre axial (AxB1) est parallèle au premier centre axial (AxM1) et à un deuxième centre axial (AxR1) et est séparé de chacun parmi le premier centre axial (AxM1) et le deuxième centre axial (AxR1), et un troisième engrenage (51) tourne conjointement avec un premier engrenage (35) dans une position séparée du deuxième engrenage (39), dans lequel le premier dispositif de frein (27) comprend le troisième engrenage (51) configuré pour tourner autour du troisième centre axial (AxB1) et freiner la rotation du premier engrenage (35), le premier moteur (23) est logé dans le premier bras (15) et comprend le premier engrenage (35) configuré pour tourner autour du premier centre axial (AxM1) et le premier décélérateur (25) est configuré pour décélérer la rotation du deuxième engrenage (39) et transmettre la rotation décélérée à un premier arbre de sortie (43), le premier décélérateur (25) comprenant le deuxième engrenage (39) configuré pour tourner, conjointement avec la rotation du premier engrenage (35), autour du deuxième centre axial (AxR1) parallèle au premier centre axial (AxM1) et décalé du premier centre axial (AxM1) et le premier arbre de sortie (43) couplé au deuxième bras (17), dans lequel :
le premier engrenage (35) est couplé au deuxième engrenage (39), et
dans lequel le procédé est **caractérisé en ce qu'**il comprend en outre l'étape consistant à :
prévoir un interstice entre le troisième engrenage (51) et le deuxième engrenage (39).
